# EUROPÄISCHE PATENTSCHRIFT

(11) **EP 1 180 269 B1**
(45) Veröffentlichungstag und Bekanntmachung des Hinweises auf die Patenterteilung: **19.04.2006**
(21) Anmeldenummer: 00945568.4
(22) Anmeldetag: 26.05.2000
(51) Int. Cl.: H04B 1/713

(54) **FREQUENZSPRUNGVERFAHREN FÜR EIN MOBILFUNKSYSTEM**
FREQUENCY HOPPING METHOD FOR A MOBILE RADIO TELEPHONE SYSTEM
PROCEDE A SAUT DE FREQUENCE POUR SYSTEME DE TELEPHONIE MOBILE

(30) Priorität: 27.05.1999 DE 19924249
(43) Veröffentlichungstag der Anmeldung: 20.02.2002
(73) Patentinhaber: Infineon Technologies AG, 81669 München (DE)
(72) Erfinder: BOETZEL, Ulrich, D-41564 Kaarst (DE); BRÜCKMANN, Dieter, D-40670 Meerbusch (DE); KRANZ, Christian, D-40885 Ratingen Lintorf (DE); POTT, Rüdiger, D-58455 Witten (DE)
(74) Vertreter: Banzer, Hans-Jörg
(86) Internationale Anmeldenummer: PCT/DE2000/001716
(87) Internationale Veröffentlichungsnummer: WO 2000/074256

(56) Entgegenhaltungen:
- EP-A- 0 621 707
- US-A- 5 323 447
- US-A- 5 528 623
- US-A- 5 848 095

## Beschreibung

Die vorliegende Erfindung betrifft ein Frequenzsprungverfahren für ein Mobilfunksystem, insbesondere für ein WDCT-Mobilfunksystem.

Frequenzspringen (Frequency Hopping) wird bekannterweise in Kommunikationssystemen, insbesondere in Mobilfunksystemen, zur Verbesserung der Übertragungssicherheit eingesetzt. Zu diesem Zweck wird die Trägerfrequenz in bestimmten Abständen gewechselt, wobei in einem Mobilfunksystem die Mobilstationen von der Basisstation zum Frequenzspringen aufgefordert werden. Ebenso wird den Mobilstationen die Reihenfolge des Frequenzspringens, d.h. die Reihenfolge der nacheinander zu verwendenden Trägerfrequenzen, von der Basisstation mitgeteilt.

Ein bekannter Mobilfunkstandard, bei dem beispielsweise Frequenzspringen angewendet wird, ist der sogenannte DECT-Mobilfunkstandard (Digital European Cordless Telephone). Dieser Mobilfunkstandard wurde von ETSI (European Telecommunications Standard Institute) entwickelt, um auch für sogenannte CT-Anwendungen (Cordless Telephone), d.h. für die schnurlose Telefonie, ein führendes europäisches System zur Verfügung zu haben. Der DECT-Mobilfunkstandard bietet eine sehr gute Obertragungsqualität bei allerdings beschränkter Reichweite. Schnurlose DECT-Systeme werden daher bevorzugt im Heimbereich oder in Firmengebäuden eingesetzt.

Bei dem DECT-Mobilfunkstandard werden für das Frequenzspringen zehn unterschiedliche Trägerfrequenzen mit einem Abstand von 1728 kHz verwendet. Das Frequenzspektrum umfaßt insgesamt 1880 - 1900 MHz. Den Mobilstationen werden von der Basisstation über einen Steuerkanal die für das Frequenzspringen zu verwendenden Trägerfrequenzen mitgeteilt. Zu diesem Zweck wird von der Basisstation eine Steuernachricht an die Mobilstationen übermittelt, welche den Mobilstationen die an der Basisstation für das Frequenzspringen verfügbaren Trägerfrequenzen mitteilt. Diese Nachricht umfaßt ein Bitfeld, in dem für zehn mögliche Trägerfrequenzen von der Basisstation wahlweise jeweils ein Bit auf '1' oder '0' gesetzt wird. Ist das einer bestimmten Trägerfrequenz entsprechende Bit auf '1' gesetzt, bedeutet dies für die Mobilstation, daß die entsprechende Trägerfrequenz für das Frequenzspringen verwendet werden kann.

Bei dem zuvor beschriebenen Prinzip ist das Frequenzspringen auf maximal zehn unterschiedliche Trägerfrequenzen beschränkt. Die Reihenfolge der beim Frequenzspringen zu verwendenden Trägerfrequenzen ist vorgegeben. Tritt während einer Übertragung beispielsweise eine Störung infolge einer Kollision mit Störfrequenzen auf, wird eine erneute Übertragung mit Hilfe derselben Frequenzsprungreihenfolge versucht, was jedoch oftmals fehlschlägt, wenn dieselben Störer (beispielsweise Mikrowellenfrequenzen) weiterhin vorhanden sind.

Ebenso werden in weiteren neueren Standards, wie beispielsweise dem Bluetooth- oder dem SWAP-Standard, statische Frequenzsprungverfahren verwendet, mit deren Hilfe ebenfalls nicht zuverlässig Kollisionen mit Störern vermieden werden können, wodurch sich zwangsläufig die Leistungsfähigkeit des Systems verschlechtert.

Darüber hinaus wurde der DECT-Standard im wesentlichen für den europäischen Telefonmarkt entwickelt. Da jedoch auch das Bedürfnis nach einem zuverlässigen Schnurlostelefonsystem für den amerikanischen Markt besteht, wurde von der Anmelderin aufbauend auf dem DECT-Standard der sogenannte WDCT-Mobilfunkstandard (Worldwide Digitale Cordless Telephone) entwickelt. Der WDCT-Standard verwendet ein Frequenzband zwischen 2400 und 2483,5 MHZ, was in Übereinstimmung mit den amerikanischen FCC-Bestimmungen für einen unlizenzierten Betrieb ist.

Neben dem zu verwendenden Frequenzband werden jedoch gemäß den FCC-Bestimmungen weitere Bedingungen an das zu betreibende Mobilfunksystem gestellt, welche u.a. auch das jeweils angewendete Frequenzsprungverfahren betreffen. So wird von den FCC-Bestimmungen gefordert, daß das Frequenzsprungverfahren mindestens 75 verschiedene Trägerfrequenzen umfassen muß, da innerhalb einer Periode von 30s jede Frequenz nicht länger als 0,4s verwendet oder aufrechterhalten werden darf. Jede Frequenz muß im Mittel gleich oft verwendet werden. Des weiteren wird gefordert, daß die jeweils zu verwendenden Trägerfrequenzen aus einer pseudozufällig geordneten Trägerfrequenzliste ausgewählt werden müssen.

Ein Frequenzsprungverfahrens nach dem Stand der Technik ist aus EP-A-0621707 bekannt.

Der vorliegenden Erfindung liegt allgemein die Aufgabe zugrunde, ein Frequenzsprungverfahren für ein Mobilfunksystem vorzuschlagen, womit ein zuverlässigerer Betrieb und eine bessere Übertragungssicherheit erzielt werden kann. Insbesondere soll das Frequenzsprungverfahren die Erfüllung der oben genannten FCC-Bestimmungen sowie ein Frequenzspringen aufbauend auf dem DECT-Standard mit einer möglichst geringen Änderung des DECT-Protokolls ermöglichen.

Die oben genannte Aufgabe wird gemäß der vorliegenden Erfindung durch ein Frequenzsprungverfahren mit den Merkmalen des Anspruches 1 gelöst. Die Unteransprüche beschreiben bevorzugte und vorteilhafte Ausführungsformen der vorliegenden Erfindung.

Erfindungsgemäß werden bestimmten Betriebsbedingungen des Mobilfunksystems, insbesondere das Vorliegen mögocher verrauschter Trägerfrequenzkanäle, überwacht und davon abhängig die vorgegebene Frequenzsprungreihenfolge angepaßt. Vorzugsweise wird abhängig von der zuvor erwähnten Überwachung den Mobilstationen mitgeteilt, welche der gemäß der vorgegebenen Frequenzsprungreihenfolge vorgesehenen Trägerfrequenzen nicht verwendet werden sollen.

Die vorliegende Erfindung ermöglicht somit eine den jeweiligen Betriebsbedingungen optimal angepaßte Verwendung eine großen Anzahl von Trägerfrequenzen, indem den einzelnen Mobilstationen von der Basisstation jeweils mitgeteilt wird, welche Trägerfrequenzen zu verwenden sind. Insbesondere ist mit Hilfe der vorliegenden Erfindung die Einhaltung der bereits beschriebenen FCC-Bestimmungen möglich.

Die Übertragung der Aktualisierungsinformationen, welche der Trägerfrequenzen nicht verwendet werden sollen, erfolgt über einen Steuerkanal des Mobilfunksystems. Das Mobilfunksystem ist bevorzugt in Form eines auf dem DECT-Standard basierenden WDCT-Mobilfunksystems mit 95 möglichen Trägerfrequenzen im Frequenzbereich zwischen ca. 2400 und 2500 MHz ausgestaltet, wobei die zuvor erwähnten Aktualisierungs- oder Updateinformationen über den N_{T}- oder den Q_{T}-Steuerkanal übertragen werden können. Zu diesem Zweck werden gemäß bestimmten Ausführungsbeispielen der Erfindung entsprechende Abwandlungen des DECT-Protokolls vorgeschlagen.

Der Wechsel der Trägerfrequenz kann sowohl von Rahmen zu Rahmen als auch von Zeitschlitz zu Zeitschlitz, d.h. innerhalb eines Rahmens, durchgeführt werden.

Die Erfindung wird nachfolgend anhand bevorzugter Ausführungsbeispiele unter Bezugnahme auf die beigefügte Zeichnung näher erläutert.
Fig. 1 zeigt ein Zustandsdiagramm zur Erläuterung der bei einem erfindungsgemäßen Mobilfunksystem auftretenden Zustände und Zustandsübergänge der Basisstation,
Fig. 2 zeigt ein Zustandsdiagramm zur Erläuterung der bei einem erfindungsgemäßen Mobilfunksystem auftretenden Zustände und Zustandsübergänge einer Mobilstation,
Fig. 3 zeigt eine Gegenüberstellung der bei einem herkömmlichen DECT-Mobilfunksystem und einem WDCT-Mobilfunksystem gemäß einem ersten Ausführungsbeispiel der vorliegenden Erfindung übertragenen N_{T}-Nachricht,
Fig. 4 zeigt eine Gegenüberstellung der bei einem herkömmlichen DECT-Mobilfunksystem und einem WDCT-Mobilfunksystem gemäß einem zweiten Ausführungsbeispiel der vorliegenden Erfindung übertragenen Q_{T}-Nachricht,
Fig. 5 zeigt eine Gegenüberstellung eines Abschnitts der bei einem herkömmlichen DECT-Mobilfunksystem und einem WDCT-Mobilfunksystem gemäß einem weiteren Ausführungsbeispiel der vorliegenden Erfindung übertragenen P_{T}-Nachricht,
Fig. 6 zeigt den Aufbau eines gemäß dem DECT-Mobilfunkstandard übertragenen Rahmens,
Fig. 7 zeigt die Übertragung und Priorität von Steuerkanälen in einer Mehrrahmenstruktur, und
Fig. 8 zeigt ein vereinfachtes Blockschaltbild eines erfindungsgemäßen Mobilfunksystems.

Die vorliegende Erfindung wird nachfolgend anhand des von der Anmelderin entwickelten WDCT-Mobilfunkverfahrens erläutert, wobei jedoch die Erfindung grundsätzlich auch auf andere Telekommunikationsstandards anwendbar ist.

Der WDCT-Mobilfunkstandard geht, wie bereits erläutert worden ist, von dem bekannten DECT-Mobilfunkstandard aus.

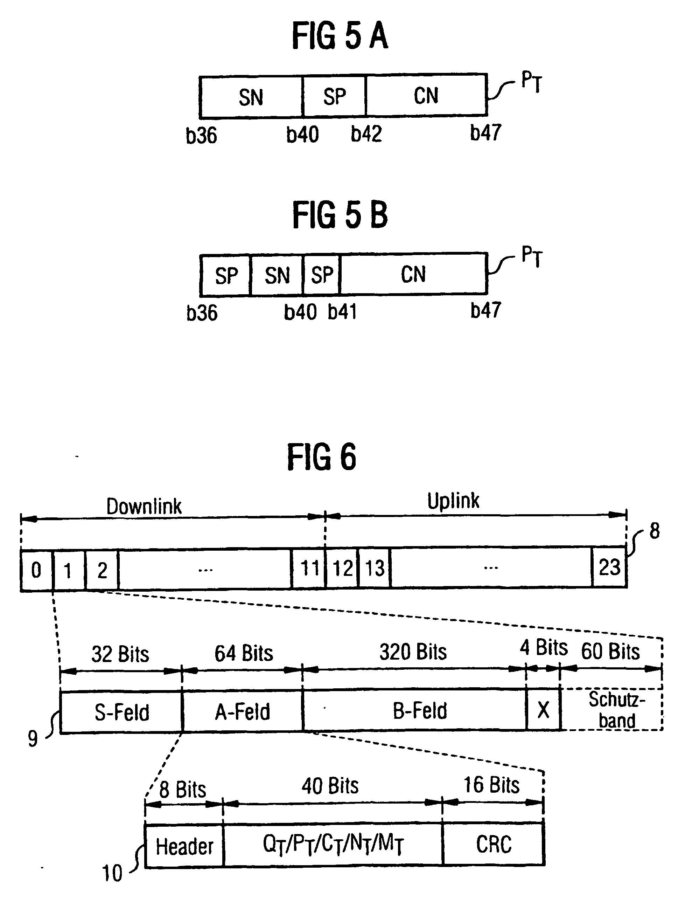

In Fig. 6 ist die Rahmen- und Zeitschlitzstruktur für ein Übetragungssignal gemäß dem DECT-Standard dargestellt. Wie bereits erläutert worden ist, wird beim DECT-Standard das zur Verfügung stehende Frequenzspektrum (1880 - 1900 MHz) in zehn Träger mit je 1728 kHz unterteilt.

Wie in Fig. 6 gezeigt ist, wird jeder Trägerrahmen 8 in 24 Zeitschlitze à 480 Bits (Zeitschlitzdauer 416,6µs) unterteilt, wobei für den Downlink, d.h. für eine Übertragung von der Basisstation zu einer Mobilstation, die ersten 12 und für den Uplink, d.h. für eine Übertragung von einer Mobilstation zu der Basisstation, die zweiten 12 Zeitschlitze vorgesehen sind. Für eine Duplexverbindung werden Paare von Zeitschlitzen gebildet, wobei beispielsweise der Zeitschlitz 11 und der Zeitschlitz 23 ein Paar bilden. Auf diese Weise stehen 12*10 = 120 Duplexkanäle mit einer Übertragungsrate von 1152 kbit/s zur Verfügung.

Die Dauer des in Fig. 6 gezeigten DECT-Rahmens beträgt 10ms, wobei alle 10ms in einem Zeitschlitz 9 einmal 388 Bits in einem Zeitschlitz übertragen werden, welche für den sogenannten MAC-Layer (Medium Access Control) zur Verfügung stehen. Die Hauptaufgaben des MAC-Layers sind das Ressourcenmanagement, das Multiplexen verschiedener Steuerkanäle sowie der Schutz vor einer fehlerhaften Übertragung.

Wie des weiteren in Fig. 6 gezeigt ist, umfassen die für den MAC-Layer vorgesehenen 388 Bits ein S-Feld (32 Bits) für Synchronisierungszwecke, ein A-Feld (64 Bits) für Steuer- und Signalisierungszwecke, ein B-Feld (40 Bits) als Nutzdatenfeld und vier unbenutze Bits. Der entsprechende Zeitschlitz 9 wird durch ein 60 Bits umfassendes Schutzband (Guardband) aufgefüllt.

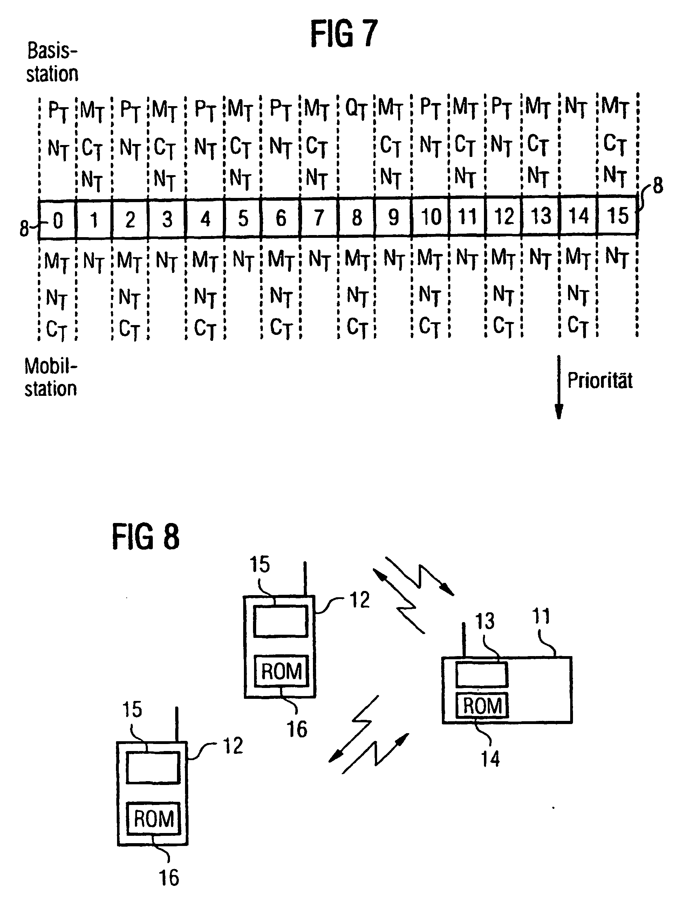

In Fig. 6 ist zudem der Aufbau des zuvor erwähnten A-Felds 10 dargestellt. Die 64 Bits des A-Felds 10 sind auf einen Header (8 Bits), bestimmte Steuerkanäle (40 Bits) und ein CRC-Feld (Cyclic Redundancy Check, 16 Bits) aufgeteilt. Das CRC-Feld dient zum Erkennen von Übertragungsfehlern auf den Signalisierungs- bzw. Steuerkanälen. In jedem A-Feld werden ein oder mehrere logische Steuerkanäle Q_{T}, P_{T}, C_{T}, N_{T} und M_{T} gemultiplext übertragen. Dabei werden die hierzu zur Verfügung stehenden 40 Bits des A-Felds dynamisch je nach aktueller Anforderung zwischen den einzelnen Steuerkanälen aufgeteilt, wobei ein in Fig. 7 gezeigtes und in eine 16 DECT-Rahmen 8 (0... 15) umfassenden Mehrrahmenstruktur eingebettetes Prioritätsschema zur Anwendung kommt. So wird beispielsweise von der Basisstation des entsprechenden DECT-Mobilfunksystems im Rahmen Nr. 1 der Steuerkanal C_{T} nur im A-Feld übertragen, falls nicht der M_{T}-Steuerkanal übertragen werden muß. Des weiteren wird von einer Mobilstation in diesem DECT-Mobilfunksystem beispielsweise im Rahmen Nr. 12 der Steuerkanal C_{T} im entsprechenden A-Feld nur übertragen, falls weder der Steuerkanal M_{T} noch der Steuerkanal N_{T} übertragen werden muß. Auf diese Weise ist gemäß dem in Fig. 7 gezeigten Prioritätsschema sowohl für den Uplink als auch für den Downlink die Belegung der A-Felder der einzelnen Steuerrahmen 8 zeitlich gemultiplext festgelegt.

Ausgehend von diesem bekannten Aufbau des A-Felds eines DECT-Rahmens werden gemäß bevorzugten Ausführungsbeispielen der vorliegenden Erfindung Abwandlungen vorgeschlagen, welche die Übertragung einer Update- oder Aktualisierungsinformation ermöglichen, um die von der Basisstation zu Beginn des Betriebs vorgegebene und anschließend vorzugsweise in den einzelnen Mobilstationen in Form einer Frequenzsprungliste gespeicherte Frequenzsprungreihenfolge kontinuierlich an die jeweils gegebenen Bedingungen anzupassen, so daß sichergestellt ist, daß nur diejenigen Frequenzen für das Frequenzspringen verwendet werden, bei denen keine Kollisionen mit Störern auftreten. Erfindungsgemäß wird somit eine adaptive Frequenzsprungstrategie vorgeschlagen, welche die Umgehung bzw. Vermeidung von Kollisionen mit Störfrequenzen ermöglicht.

In Fig. 8 ist stark vereinfacht der grundsätzliche Aufbau eines beispielsweise gemäß dem WDCT-Mobilfunkstandard betriebenen Mobilfunksystems mit einer Basisstation 11 und mehreren damit kommunizierenden Mobilstationen 12 dargestellt. Sowohl die Basisstation 11 als auch die einzelnen Mobilstationen 12 umfassen jeweils eine WDCT-Steuerung (Controller) 13 bzw. 15, die derart ausgestaltet sind, daß im Frequenzband 2400 - 2483,5 MHz in Übereinstimmung mit den U.S.-FCC-Bestimmungen ein schnurloser Telefonbetrieb unter Anwendung eines Frequenzsprungverfahrens implementiert wird. Die Implementierung der Frequenzsprungstrategie bzw. des Frequenzsprungsverfahrens kann im Prinzip dem Betreiber überlassen werden, wobei die beim Frequenzspringen zu durchlaufende Reihenfolge der Trägerfrequenzen von der Basisstation 11 vorgegeben und an die Mobilstationen 12 übertragen wird. Diese Frequenzsprungliste wird sowohl in der Basisstation 11 als auch in den Mobilstationen 12 in einem ROM-Speicher 14 bzw. 16 gespeichert. Während des Betriebs des in Fig. 8 gezeigten Mobilfunksystems werden von der Basisstation 11 vorzugsweise kontinuierlich Aktualisierungsinformationen an die Mobilstationen 12 übertragen, welche den Mobilstationen 12 mitteilen, welche der in der Frequenzsprungliste gespeicherten Trägerfrequenzen zukünftig nicht zu verwenden sind, um möglichweise bei bestimmten Trägerfrequenzen auftretenden Störeinflüssen gerecht zu werden. Zu diesem Zweck kann von der WDCT-Steuerung 13 der Basisstation 11 kontinuierlich das Frequenzumfeld des Mobilfunksystems bzgl. möglicher Störfrequenzen überwacht oder von dem Betreiber des Mobilfunksystems der Basisstation 11 eine aktualisierte Frequenzsprungliste vorgegeben werden.

Zur Übertragung dieser auf die in den Mobilstationen 12 gespeicherten Frequenzsprungliste- oder Frequenzsprungreihenfolge bezogene Aktualisierungsinformation sind jedoch insbesondere zur Erfüllung der bereits erwähnten FCC-Bestimmungen Abwandlungen des DECT-MAC-Layers bzw. des A-Felds notwendig. Diese Abwandlungen werden gemäß den nachfolgend erläuterten bevorzugten Ausführungsbeispielen der vorliegenden Erfindung insbesondere derart getroffen, daß eine möglichst geringe Änderung des DECT-Protokolls erforderlich ist, so daß die höheren Layers oder Schichten von dem DECT-Standard übernommen werden können.

Bei dem in Fig. 8 gezeigten WDCT-Mobilfunksystem sind in dem Frequenzbereich 2400 - 2483,5 MHZ 95 Trägerfrequenzen verfügbar. Die FCC-Bestimmungen fordern bei Anwendung des Frequenzspringens mindestens 75 unterschiedliche Trägerfrequenzen, so daß zur Vermeidung von Störungen oder Kollisionen mit Störfrequenzen maximale 20 der verfügbaren Trägerfrequenzen nicht benutzt werden können. Die tatsächlich verwendete Frequenzsprungreihenfolge entspricht einer Untermenge der verfügbaren 95 Frequenzen. Für jede Basisstation 11 kann beispielsweise abhängig von der Kennung oder dem ID dieser Basisstation eine eigene pseudozufällig geordnete Liste dieser 95 Trägerfrequenzen erzeugt werden, wobei auf ein minimaler Kanalabstand eingehalten werden muß, um nicht infolge von Breitbandstörungen mehr als einen Träger zu verlieren. Die auf dieses Weise erzeugte Frequenzsprungliste ist, wie bereits erwähnt worden ist, sowohl der Basisstation 11 als auch sämtlichen damit kommunizierenden Mobilstationen 12 bekannt.

Erfaßt der WDCT-Controller 13 der Basisstation 11 einen Rauschkanal, d.h. eine Trägerfrequenz, bei der keine Übertragung mit ausreichender Qualität möglich ist, ist ein Update bzw. eine Aktualisierung der zuvor gespeicherten Frequenzsprungliste oder -reihenfolge vorgesehen, um diese Rauschkanäle aus dem Frequenzsprungzyklus zu eliminieren. Erfindungsgemäß handelt es sich somit um eine adaptives Frequenzsprungverfahren.

Nachfolgend werden zwei Frequenzsprungkonzepte beschrieben, wobei bei dem ersten Konzept die Trägerfrequenz von Zeitschlitz zu Zeitschlitz verändert wird, so daß für unterschiedliche Mobilstationenen 12 unterschiedliche Frequenzsprungreihenfolgen implemetiert werden-können, was ein sehr großes Maß an Flexibilität mit größerem Steueraufwand zur Folge hat. Dagegen ist gemäß dem zweiten Konzept vorgesehen, die Trägerfrequenz lediglich von Rahmen zu Rahmen zu verändern, so daß alle bezüglich derselben Basisstation 11 synchronisierten Mobilstationen 12 mit derselben Frequenzsprungreihenfolge betrieben werden müssen. Dieses zweite Konzept kann leichter implementiert werden, besitzt jedoch eine geringere Flexibilität.

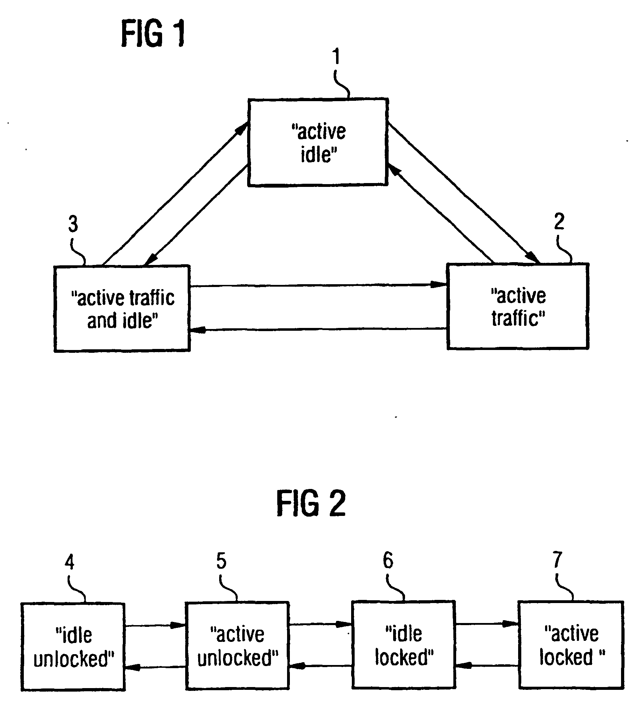

Die angewendeten Frequenzsprungverfahren müssen derart konzipiert werden, daß die unterschiedlichen Betriebszustände der Mobilstationen 12 und der Basisstation 11 sowie die jeweils möglichen Zustandsübergänge berücksichtigt werden. Dies soll nachfolgend näher anhand der Darstellungen von Fig. 1 und Fig. 2 erläutert werden.

In Fig. 1 sind die unterschiedlichen aktiven Betriebszustände der Basisstation 11 dargestellt, wobei sich die Basisstation 11 in einem mit "active idle" bezeichneten Betriebszustand 1 befindet, falls keine Verbindung zu einer Mobilstation 12 besteht. In diesem Zustand wird von der Basisstation 11 ein sogenanntes Dummyträgersignal ("dummy bearer") gesendet und dabei periodisch sämtliche zur Verfügung stehenden physikalischen Kanäle abgetastet, um eine von einer Mobilstation 12 gesendete Verbindungsanfrage zu erfassen. Sobald eine Verbindung zu einer Mobilstation 12 aufgebaut worden ist, gelangt die Basisstation 11 in einen mit "active traffic" bezeichneten Zustand 2. Ein Übergang in den Zustand 1 erfolgt wieder, falls sämtliche Verbindungen aufgelöst worden sind und wieder ein Dummyträgersignal von der Basisstation 11 gesendet wird. Die Basisstation 11 gelang von dem Zustand 2 in einen mit "active traffic and idle" bezeichneten Zustand 3, falls von ihr zusätzliche zu mindestens einem Verbindungsträgersignal ("traffic bearer") auch ein Dummyträgersignal ausgesendet wird. Eine Rückkehr von dem Zustand 3 in den Zustand 2 erfolgt, falls von der Basisstation 11 kein einziges Dummyträgersignal mehr gesendet wird. Entsprechend gelangt die Basisstation 11 von dem Zustand 1 in den Zustand 3, sobald mindestens eine Verbindung aufgebaut worden ist, während eine Rückkehr von dem Zustand 3 in den Zustand 1 erfolgt, falls auch die letzte Verbindung mit einer Mobilstation 12 aufgelöst worden ist.

In Fig. 2 sind die unterschiedlichen Betriebszustände einer Mobilstation 12 dargestellt, wobei sich die Mobilstation 12 nicht aktiv in einem mit "idle unlocked" bezeichneten Zustand 4 befindet. Unmittelbar nach ihrem Einschalten gelangt die Mobilstation 12 in einen mit "active unlocked" bezeichneten Zustand 5. In diesem Zustand versucht die Mobilstation 12, eine Synchronisierung bezüglich der Basisstation 11 durchzuführen, indem sämtliche Zeitschlitze mit einer festen Frequenz abgetastet werden. Wurde beispielsweise innerhalb einer Periode von einer Sekunde kein Dummyträgersignal von der Basisstation 11 erfaßt, wird die Frequenz gewechselt. Hat die Mobilstation 12 den von einer Basisstation 11 übertragenen Dummyträger erfaßt, wird automatisch mit Hilfe der jeweils verwendeten Soft- und Hardware sowohl eine Bit- als auch eine Zeitschlitzsynchronisation bezüglich der Basisstation 11 durchgeführt. Zu diesem Zweck werden die in dem A-Feld jeweils übertragenen Nachrichten ausgewertet. Im Gegensatz zu dem bekannten DECT-Standard, bei dem stets eine feste Frequenzsprungreihenfolge verwendet wird, muß zusätzlich auch eine Synchronisation bezüglich der aktuell gültigen Frequenzsprungreihenfolge der Basisstation 11 durchgeführt werden. Nach Durchführung der Synchronisationsvorgänge gelangt die Mobilstation 12 in einen mit "idle locked" bezeichneten Zustand 6.

In diesem Zustand kann die Mobilstation 12 durch Eingabe eines entsprechenden Softwarebefehls zur Reduzierung des Stromverbrauchs in einem Sleep-Modus betrieben werden, wobei in diesem Fall die Mobilstation 12 bzw. deren Steuerung 15 lediglich jeden n-ten Rahmen aktiviert wird, um ein Dummyträgersignal zu erfassen, wobei n beispielsweise bis zu 64 für einen Sleep-Modus mit geringem Tastverhältnis betragen kann. Die Mobilstation 12 kann somit bei geringem Stromverbrauch auf die Basisstation 11 synchronisiert bleiben. Der Sleep-Modus kann von der Steuerung 15 bzw. dem entsprechenden Prozessor auf zwei unterschiedliche Arten verlassen werden. Entweder hat ein die in Fig. 7 gezeigte Mehrrahmenstruktur überwachender Mehrrahmenzähler auf Null heruntergezählt oder es wird beispielsweise über die Tastatur ein den Prozessor "aufweckender" externer Interrupt erzeugt. Nach dem Verlassen des Sleep-Modus muß die Software der entsprechenden Mobilstation 12 darüber informiert sein, wielange sie sich im Sleep-Modus befunden hat, um wieder die Synchronisation bezüglich der Frequenzsprungreihenfolge der Basisstation 11 aufnehmen zu können. Aus diesem Grunde sind der Steuerung bzw. dem Microcontroller 15 die augenblicklichen Werte des bereits erwähnten Mehrrahmenzählers und des normalen Rahmenzählers bekannt.

Sobald von der Mobilstation 12 oder der Basisstation 11 aus ein Ruf getätigt wird, wird ein Verbindungsträgersignal gesendet. Normalerweise wird auch der Dummyträger weiterhin aufrechterhalten. Die Mobilstation 12 wechselt dann in einen mit "active locked" bezeichneten Zustand 7. Die Basisstation 11 wechselt in diesem Fall in den in Fig. 1 gezeigten Zustand 3 ("active traffic and idle"). Die maximale Anzahl gleichzeitiger Verbindungen entspricht der Anzahl der verfügbaren Zeitschlitze in Senderichtung. Es ist zu beachten, daß der Dummyträger freigegeben werden muß, falls eine vierte Verbindung aufgebaut wird, wobei dann die Basisstation 11 in den in Fig. 1 gezeigten Zustand 2 wechselt ("active traffic").

Wie bereits erwähnt worden ist, ist im Rahmen der vorliegenden Erfindung sowohl ein Frequenzspringen innerhalb eines Rahmens, d.h. zwischen einzelnen Zeitschlitzen, sowie auch lediglich zwischen zwei Rahmen möglich.

Bei der ersten Frequenzsprungvariante muß die Trägerfrequenz zwischen zwei Zeitschlitzen desselben Rahmen gewechselt werden.

Für die Übertragung des Dummyträgersignals werden sämtliche 95 Trägerfrequenzen der in der Basisstation gespeicherten Frequenzsprungliste verwendet. Diese Reihenfolge wird für due Übertragung des Dummyträgers nicht verändert und zudem nur für den Dummyträger benutzt. Da diese Reihenfolge auch den Mobilstationen bekannt ist, können diese ihre Frequenz nach ihrer Synchronisation auf die Basisstation verändern. Diese Frequenzsprungreihenfolge wird von allen Mobilstationen verwendet, welche sich in dem in Fig. 2 gezeigten synchronisierten Zustand 6 ("idle locked") befinden. Eine sich in diesem Zustand befindende Mobilstation kann, wie bereits erwähnt worden ist, in einen stromsparenden Sleep-Modus umgeschaltet werden, wobei in diesem Fall die Mobilstation lediglich in Abständen von n Rahmen zum Empfangen eines Dummyträgersignals aktiviert wird. Das in Fig. 6 gezeigte A-Feld des DummyTrägersignals sollte wie bei dem DECT-Standard eine P_{T-}Nachricht enthalten, um Verbindungsanfragen von der Basisstaion erfassen zu können. Dies kann dadurch realisiert werden, daß stets der erste Rahmen des in Fig. 7 gezeigten Mehrfachrahmens empfangen wird.

Befindet sich hingegen eine Mobilstation nach dem Aufbau einer Verbindung mit der Basisstation in dem in Fig. 2 gezeigten Zustand 7 ("active locked"), sollte bei Auftreten von Störungen die Frequenzsprungsreihenfolge des Trägersignals verändert oder angepaßt werden. Da diese Veränderungen der Frequenzsprungsreihenfolge individuell für jeden Verbindungsträger durchgeführt werden können, kann jede Mobilstation nach der Anpassung eine unterschiedliche Frequenzsprungsreihenfolge besitzen. Wie nachfolgend noch näher erläutert wird, werden die Aktualisierungs- oder Updateinformationen für die Frequenzsprungreihenfolge für jeden Verbindungsträger mit Hilfe des A-Felds des entsprechenden Zeitschlitzes übertragen. Nach Auflösen einer Verbindung geht die entsprechende Mobilstation wieder in den Zustand 6 ("idle locked") über, wobei auch die für diesen Verbindungsträger gültige Frequenzsprungreihenfolge deaktiviert oder aufgelöst wird. Die entsprechende Mobilstation wird anschließend wieder auf das Dummyträgersignal der Basisstation synchronisiert.

Sobald gleichzeitig vier Verbindungen aktiv sind, muß der Dummyträger deaktiviert werden. Da maximal sechs Mobilstationen gleichzeitig an einer Basisstation betrieben werden können, bedeutet dies, daß bis zu zwei in dem Zustand 6 ("idle locked") befindliche Mobilstationen ihre Synchronisation zu der Basisstation verlieren können. Um dies zu vermeiden, sollte den in dem Zustand 6 befindlichen Mobilstationen mit Hilfe des ersten Rahmens der in Fig. 7 gezeigten Mehrrahmenstruktur mitgeteilt werden, daß der Dummyträger deaktivert wird. Diese Mobilstationen können dann dem zuletzt aktivierten Verbindungsträgersignal bzw. dessen Frequenzsprungreihenfolge folgen, wobei die Frequenzsprungreihenfolge dieses Trägersignals nicht verändert werden darf bis sämtliche im Zustand 6 ("idle locked") befindliche Mobilstationen eine entsprechende Aufforderung der Basisstation zur Veränderung der Frequenzsprungreihenfolge bestätigt haben. Es ist zu beachten, daß während der Zeitspanne, in der ein viertes Verbindungsträgersignal aktiv ist, die im Zustand 6 befindlichen Mobilstationen einen erhöhten Energieverbrauch besitzen, da sie das Steuer- oder A-Feld in jedem Rahmen empfangen müssen, d.h. ein Umschalten in den Sleep-Modus sollte in diesem Fall vermieden werden. Sollte wieder eine Verbindung aufgelöst werden, so daß weniger als vier Verbindungsträger gleichzeitig aktiv sind, kann erneut das Dummyträgersignal aktiviert werden, und die sich im Zustand 6 befindenden Mobilstationen können wieder auf die Frequenzsprungreihenfolge dieses Dummyträgers umgeschaltet werden.

Gemäß der zweiten Frequenzsprungvariante muß die Trägerfrequenz lediglich zu Beginn eines neuen Rahmens gewechselt werden, d.h. sämtliche Zeitschlitze eines Rahmens werden auf derselben Trägerfrequenz übertragen.

Auch für diese Variante des Frequenzspringens kann im Prinzip die für einen Frequenzwechsel innerhalb eines Rahmens beschriebene Strategie angewendet werden. Sobald ein Verbindungsträgersignal aktiviert worden ist, wird ebenfalls dessen Frequenzsprungreihenfolge abhängig von der Frequenzumgebung des Mobilfunksystems angepaßt. Da dadurch auch der Dummyträger beeinfluß wird, müssen sämtliche Mobilstationen von einer Aktualisierung der Frequenzsprungreihenfolge informiert werden, um selbst geeignete Maßnahmen ergreifen zu können. So kann in diesem Fall beispielsweise vollständig auf die Verwendung des Sleep-Modus für die im Zustand 6 ("idle locked") befindlichen Mobilstationen verzichtet werden, damit diese der Frequenzsprungreihenfolge des Dummyträgers folgen können. Dies hat jedoch einen erhöhten Energieverbrauch dieser Mobilstationen zur Folge. Kann auf den Sleep-Modus nicht verzichtet werden, bedeutet dies, daß die betroffenen Mobilstationen lediglich in Abständen von n Rahmen nach dem Dummyträgersignal suchen. In diesem Fall darf dann die Frequenzsprungreihenfolge des Verbindungsträgers nicht verändert werden bis sämtliche im Zustand 6 befindlichen Mobilstationen eine entsprechende Aufforderung der Basisstation bestätigt haben, wodurch die Zeitspanne bis zur Anpassung der Frequenzsprungreihenfolge verlängert und folglich die Empfindlichkeit gegenüber Störern erhöht wird. Bei der zuvor beschriebenen zweiten Frequenzsprungvariante sollte im Gegensatz zum Frequenzspringen innerhalb eines Rahmens bei Aufbau einer zweiten Verbindung das erste Verbindungsträgersignal zur Synchronisation verwendet werden, d.h. die sich im Zustand 6 ("idle locked") befindenden Mobilstationen verändern ihre Frequenz nicht mehr in Übereinstimmung mit dem Dummyträgersignal, sondern mit dem ersten Verbindungsträgersignal.

Bei beiden zuvor beschriebenen Frequenzsprungvarianten werden den Mobilstationen von der Basisstation die für das Frequenzspringen jeweils aktuell gültigen Trägerfrequenzen über das A-Feld mitgeteilt. Die entsprechende Nachricht sollte vorzugsweise von den betroffenen Mobilstationen bestätigt werden, ehe die Veränderung der Frequenzsprungreihenfolge tatsächlich realisiert wird. Für die Übertragung dieser die Frequenzsprungreihenfolge betreffenden Aktualisierungs- oder Updateinformationen sind zur Implementierung der beschriebenen Frequenzsprungstrategien Anpassungen des bereits anhand Fig. 6 erläuterten DECT-MAC-Layers erforderlich. Dies betrifft insbesondere die Art und Weise, wie die Aktualisierungsinformationen von der Basisstation an die Mobilstationen übertragen werden können. Diese Aktualisierungsinformationen geben unter Berücksichtigung möglicher Kollisionen mit Störfrequenzen an, welche der in der ursprünglichen Frequenzsprungreihenfolge vorgesehenen Trägerfrequenzen aktuell nicht verwendet werden sollen.

Beim DECT-Standard wird mit Hilfe der Q_{T}-Nachricht über das A-Feld die Information über die verfügbaren Frequenzkanäle übertragen. Gemäß dem WDCT-Standard wird jedoch im Vergleich zum DECT-Standard eine davon abweichende Anzahl an Zeitschlitzen und Trägerfrequenzen verwendet, so daß Anpassungen des DECT-Protokolls insbesondere überall dort erforderlich sind, wo diese Informationen übertragen werden. Während die gemäß dem DECT-Standard zur Markierung der vier verfügbaren Zeitschlitzpaare vorgesehenen vier Bits für den WDCT-Standard ausreichend sind, trifft dies auf die gemäß dem DECT-Standard zur Markierung der Trägerfrequenzen vorgesehenen zehn Bits nicht zu. Nachfolgend werden daher verschiedene Möglichkeiten zur Realisierung der vorliegenden Erfindung aufgezeigt.

Gemäß einem ersten Ausführungsbeispiel der vorliegenden Erfindung wird vorgeschlagen, die bereits gemäß dem DECT-Protokoll vorgesehene N_{T}-Nachricht zur Übertragung der zuvor erwähnten Akualisierungsinformation zu verwenden.

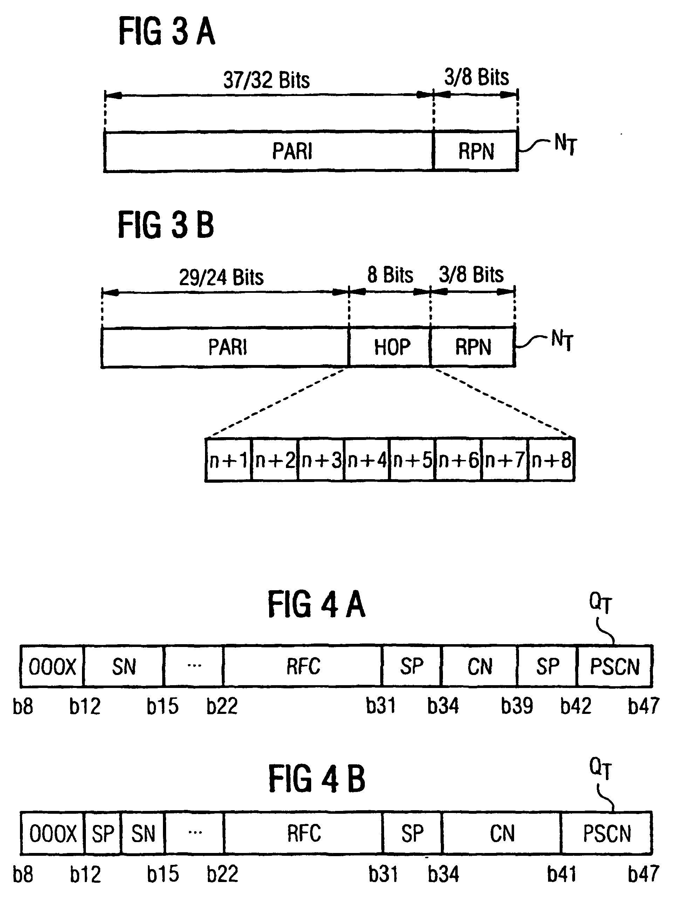

In Fig. 3A ist die Aufteilung der in Fig. 6 dargestellten 40 Bits des A-Felds für den Fall einer N_{T}-Nachricht gemäß dem herkömmlichen DECT-Standard dargestellt. Gemäß dem DECT-Standard ist die N_{T}-Nachricht in zwei Teilfelder unterteilt, wobei das erste Teilfeld eine sogenannte PARI-Information (Primary Access Right Identifier) und das zweite Teilfeld die niederwertigsten Bits einer sogenannten RPN-Information (Radio Fixed part Number) umfaßt. Für die PARI-Information werden PARI-Klassen A und B verwendet, wobei in der Klasse A die PARI-Information eine EMC-Information (Equipment Manufacturer's Code) und eine FPN-Information (Fixed part Number) umfaßt; während in der Klasse B die PARI-Information eine EIC-Information (Equipment Installer's Code) und die FPN-Information umfaßt. Wie in Fig. 3A gezeigt ist, umfaßt die PARI-Information 32-37 Bits der für die N_{T}-Nachricht insgesamt zur Verfügung stehenden 40 Bits.

Gemäß der ersten Ausführungsbeispiel der Erfindung ist vorgesehen, die für die PARI-Information vorgesehene Bitanzahl zu kürzen, insbesondere um acht Bits. Die kann in der Klasse A durch Verkürzen der EMC- und/oder der FPN-Information und in der Klasse B durch Verkürzen der EIC- und/oder FPN-Information erzielt werden. Die in Fig. 3B gezeigt ist, definieren die somit gewonnnen acht Bits dann die Frequenzsprunginformation HOP, Diese Frequenzsprunginformation HOP kann beispielsweise angeben, welche der nächsten acht Trägerfrequenzen der gespeicherten Frequenzsprungliste nicht verwendet werden dürfen.

Darüber hinaus können sämtliche zur Verfügung stehenden Trägerfrequenzen auch in Blöcke von beispielsweise jeweils zwölf Frequenzen zusammengefaßt werden, so daß auch in diesem Fall lediglich acht Bits ausreichend sind, um einen dieser Blöcke und somit alle zu diesem Block gehörenden Frequenzen zu deaktivieren. Wie bereits erwähnt worden ist, ist gemäß dem WDCT-Standard vorgesehen, insgesamt 95 Trägerfrequenzen für das Frequenzspringen zu verwenden. Dies bedeutet, daß ein Block lediglich elf Frequenzen umfaßt. Das Gruppieren der zur Verfügung stehenden Trägerfrequenzen sollte stets derart erfolgen, daß bei Auftreten von Kollisionen mit typischen Störern eine bestmögliche Übertragungsqualität gegeben ist. Es ollten jedoch lediglich maximal zwei der somit durch die Gruppierung gebildeten acht Frequenzblöcke aus der vorgegebenen Frequenzsprungreihenfolge eliminiert werden. In diesem Fall zeigen die acht Bits der Frequenzsprunginformation HOP diejenigen Blöcke an, welche nicht für das Frequenzspringen verwendet werden sollen, wobei beispielsweise jedem Frequenzblock ein Bit des HOP-Feldes zugewiesen ist und der entsprechende Frequenzblock deaktiviert wird, falls das Bit den Wert '0' aufweist.

Gemäß einem zweiten Ausführungsbeispiel der vorliegenden Erfindung wird vorgeschlagen, die bereits gemäß dem DECT-Protokoll vorgesehene Q_{T}-Nachricht zur Übertragung der zuvor erwähnten Akualisierungsinformation zu verwenden und abzuwandeln.

In Fig. 4A ist das Format der beim DECT-Standard verwendeten und mit "Static System Info" bezeichneten Q_{T}-Nachricht dargestellt, mit deren Hilfe von der Basisstaion die verfügbaren Trägerfrequenzkanäle den Mobilstationen mitgeteilt werden. Die Q_{T}-Nachricht umfaßt die Bits b8-b47 des entsprechenden A-Felds (vgl. Fig. 6). Die vier Bits b12-b15 definieren die Nummer desjenigen Zeitschlitzpaares (Slot Number, SN), bei dem die Übertragung beginnen soll. Die zehn Bits b22-b31 (RF Carrier Bits, RFC) teilen den Mobilstationen mit, welche der fest vorgegebenen Trägerfrequenzen bei der Basisstation verfügbar sind. Zu diesem Zweck ist jedem Bit des RFC-Felds eine entsprechende Trägerfrequenz zugeordnet, wobei die Trägerfrequenz verwendet werden kann, falls das entsprechende Bit den Wert '1' aufweist. Des weiteren ist in der Q_{T}-Nachricht die Kanalnummer (Channel Number, CN) des Trägers dieser Übertragung codiert. Diese CN-Information umfaßt die Bits b34-b39. Schließlich enthält die Q_{T}-Nachricht auch eine sogenannte PSCN-Information (Primary Receiver Scan Carrier Number), welche diejenige Trägerfrequenz angibt, auf der der Empfänger im nächsten Rahmen betrieben wird. Die PSCN-Information umfaßt die Bits b42-b47. Darüber hinaus umfaßt die Q_{T}-Nachricht mehrere unbenutzte Bits (Spare Bits, SP).

Da der WDCT-Standard 95 unterschiedliche Trägerfrequenzen verwendet, muß das Format der bekannten Q_{T}-Nachricht abgewandelt werden.

So könnten mehere A-Felder mit entsprechenden Q_{T}-Nachrichten zur Definierung sämtlicher 95 Trägerfrequenzen verwendet werden. Im DECT-Standard ist bereits eine sogenannte "Extended RF Carrier Information"-Q_{T}-Nachricht definiert, bei deren Verwendung lediglich vier derartige Q_{T}-Nachrichten zur Bezeichnung sämtlicher 95 Frequenzen erforderlich wären. Wie in Fig. 7 anhand der dort dargestellten Mehrrahmenstruktur gezeigt ist, wird jedoch die Q_{T}-Nachricht lediglich innerhalb eines Rahmens, nämlich innerhalb des Rahmens Nr. 8, dieser Mehrrahmenstruktur übertragen. Dies bedeutet, daß bei Verwendung dieser "Extended RF Carrier Information"-Q_{T}-Nachricht zur Übertragung der gesamten Trägerfrequenzinformation vier komplette Mehrrahmenstrukturen erforderlich wären, was insgesamt 4*160ms = 640ms benötigt und demzufolge für eine schnelle Aktualisierung der Frequenzsprungreihenfolge nicht vorteilhaft ist.

Für eine schnelle Aktualisierung der Frequenzsprungreihenfolge sollten daher vorzugsweise einfachere Verfahren verwendet werden. So können die zehn verfügbaren Bits b22-b31 der RFC-Information analog zu der bereits anhand Fig. 3 erläuterten Abwandlung der N_{T}-Nachricht zur Festlegung verwendet werden, welche der nächsten zehn Trägerfrequenzen der vorgegebenen Frequenzsprungliste oder - bei Anwendung der Gruppierung der Frequenzen in mehrere Blöcke - welche der einzelnen Frequenzblöcke verwendet/aktiviert oder nicht verwendet/deaktiviert werden sollen. Während gemäß dem DECT-Standard das RFC-Feld stets dieselben Trägerfrequenzen betrifft, betrifft bei Anwendung der vorliegenden Erfindung das RFC-Feld entweder acht Frequenzblöcke oder nur die nächsten zehn Trägerfrequenzen von insgesamt 95 Trägerfrequenzen.

Wie bereits erwähnt worden ist, ist die Q_{T}-Nachricht für den WDCT-Standard nur bedingt zur Übertragung der Frequenzsprunginformationen geeignet, da hierzu einerseits eine relativ lange Zeitspanne erforderlich und andererseits die Frequenzsprunginformation für sämtliche mit der Basisstation synchronisierte Mobilstationen identisch ist. Die Q_{T}-Nachricht sollte daher zur Übertragung der Update- oder Frequenzsprunginformation nur für die Frequenzsprungvariante verwendet werden, bei der die Trägerfrequenz innerhalb eines Rahmens konstant bleibt. Bei Anwendung der Frequenzsprungvariante, gemäß der die Trägerfrequenz innerhalb eines Rahmens zwischen zwei Zeitschlitzen gewechselt wird, sollte die in der Q_{T}-Nachricht enthaltene Frequenzsprunginformation dann außer Acht gelassen werden.

Wie in Fig. 4 gezeigt ist, wird für den WDCT-Standard zur Identifizierung eines der 95 verfügbaren Trägerfrequenzkanäle ein zusätzliches Bit benötigt, d.h. das CN-Feld umfaßt die Bits b34-b40. Zu diesem Zweck wird eines der beim DECT-Standard vorgesehenen unbenutzten Bits verwendet. Ebenso kann für den WDCT-Standard wie in Fig. 4 gezeigt das PSCN-Feld um ein Bit erweitert werden, um der beim WDCT-Standard größeren Trägerzahl gerecht zu werden, wobei zu diesem Zweck das andere der beim DECT-Standard zwischen dem CN- und dem PSCN-Feld vorhandenen unbenutzten Bits verwendet wird. Das PSCN-Feld kann jedoch unberücksichtigt gelassen werden, da diese Information bereits in der Frequenzsprungliste enthalten ist.

Für den WDCT-Standard sollte auch die gemäß dem DECT-Standard vorgesehene P_{T}-Nachricht angepaßt werden. Diese Nachricht wird von den im Zustand 6 ("idle locked") befindlichen Mobilstationen selbst dann empfangen, wenn-sich diese im Sleep-Modus befinden, und dient zur Übertragung von Verbindungsanfragen der Basisstation. Des weiteren werden über diesen Nachrichtentyp einige wichtige Informationen des DECT-MAC-Layers übertragen.

So umfaßt die P_{T}-Nachricht beispielsweise zwölf Bits, welche jeweils einem der zwölf Zeitschlitzpaare zugeordnet sind und der empfangenden Mobilstation mitteilen, falls wegen möglicher Störeinflüsse der entsprechende Zeitschlitz nicht benutzt werden kann. Zu diesem Zweck wird das jeweilige Zeitschlitzpaar entsprechend markiert, so daß der Mobilstation stets bekannt ist, über welche Zeitschlitze überhaupt Informationen erwartet werden können. Dasselbe Konzept kann auch für den WDCT-Standard angewendet werden, wobei jedoch hierzu lediglich vier Bits erforderlich sind.

Die P_{T}-Nachricht wird zudem zur Übermittlung von Trägerinformationen an die Mobilstationen verwendet, wobei diese Trägerinformationen insbesondere Informationen über die anderen Träger, über empfehlenswerte Träger und über dummy- oder verbindungslose Trägerpositionen enthalten. Wie in Fig. 5A gezeigt ist, werden diese Trägerinformationen in Form von Bits b36-b47 der P_{T}-Nachricht codiert übertragen und umfassen ein SN-Feld mit Bits b36-b39 zur Bezeichnung der Zeitschlitznummer, unbenutzte Bits (SP) b40, b41 und ein CN-Feld mit Bits b42-b47 zur Bezeichnung der Kanalnummer. Für den WDCT-Standard kann im Prinzip dieses Format übernommen werden, wobei durch Verwendung eines der beiden unbenutzten Bits eine Erweiterung des CN-Felds für die Kanalnummer auf acht Bits b41-b47 möglich ist. Darüber hinaus kann das SN-Feld zur Bezeichnung der Zeitschlitznummer auf zwei Bits reduziert werden.

Mit Hilfe der oben beschriebene Modifizierungen des DECT-MAC-Layers kann die Frequenzsprunginformation, d.h. die Information über die für das Frequenzspringen zu verwendenden Trägerfrequenzen, von der Basisstation an die Mobilstationen übermittelt werden. Dabei ist zu beachten, daß bei Verwendung der N_{T}-Nachricht für die Übertragung dieser Frequenzsprunginformation die N_{T}-Nachricht gemäß dem in Fig. 7 gezeigten Prioritätsschema die geringste Priorität besitzt und im schlimmsten Fall lediglich in dem Rahmen Nr. 14 übertragen wird. In diesem Fall kann die Synchronisation einer Möbilstation mit der Basisstation fehlschlagen, falls keine N_{T-}Nachricht empfangen wird, und die nächste Trägerfrequenz der gespeicherten Frequenzsprungliste wird automatisch deaktiviert. Dies ist jedoch nur kritisch, wenn bei den zuvor beschriebenen Fällen der Verbindungsträger zur Synchronisation mit der Basisstation verwendet werden muß.

## Patentansprüche

1. Frequenzsprungverfahren für ein Mobilfunksystem,
wobei das Mobilfunksystem eine Basisstation (11) und mindestens eine Mobilstation (12) umfaßt und die Trägerfrequenz der Basisstation (11) und der Mobilstation (12) zeitlich in bestimmten Abständen gemäß einem vorgegebenen Frequenzsprungschema gewechselt wird, wobei bestimmte Betriebsbedingungen des Mobilfunksystems überwacht und davon abhängig Aktualisierungsinformationen zur Anpassung des Frequenzsprungschemas an die Frequenzumgebung des Mobilfunksystems erzeugt werden, die erzeugten Aktualisierungsinformationen von der Basisstation (11) an die Mobilstation über einen Steuerkanal des Mobilfunksystems übertragen werden,
die Trägerfrequenz der Basisstation (11) und der Mobilstation (12) anschließend gemäß dem vorgegebenen Frequenzsprungschema unter Berücksichtigung der Aktualisierungsinformationen gewechselt wird, und
die Aktualisierungsinformationen von der Basisstation (11) an die Mobilstation (12) gesendet werden und der Mobilstation (12) die für das Frequenzsprungverfahren von der Mobilstation (12) nicht zu verwendenden Trägerfrequenzen des Frequenzsprungschemas anzeigen,
**dadurch gekennzeichnet,**
**daß** die Aktualisierungsinformationen über einen Steuerkanal übertragen werden, wobei das Format des Steuerkanals auf der MAC-Schicht des DECT-Mobilfunkstandard basiert, und
**daß** die Aktualisierungsinformationen für die gemäß dem vorgegebenen Frequenzsprungschema nächsten n Trägerfrequenzen der Mobilstation (12) anzeigen, ob die entsprechende Trägerfrequenz für das Frequenzsprungverfahren verwendet werden soll oder nicht, oder
sämtliche für das Frequenzsprungverfahren zur Verfügung stehenden Trägerfrequenzen in mehrere Frequenzgruppen zusammengefaßt sind, wobei die Aktualisierungsinformationen für jede dieser Frequenzgruppen anzeigen, ob die zu der jeweiligen Frequenzgruppe gehörenden Trägerfrequenzen für das Frequenzsprungverfahren verwendet werden sollen oder nicht.

2. Frequenzsprungverfahren nach Anspruch 1,
**dadurch gekennzeichnet,**
**daß** das vorgegebene Frequenzsprungschema sowohl in der Basisstation (11) als auch in der Mobilstation (12) gespeichert wird.

3. Frequenzsprungverfahren nach einem der vorhergehenden Ansprüche,
**dadurch gekennzeichnet,**
**daß** das vorgegebene Frequenzsprungschema Trägerfrequenzen im Frequenzbereich zwischen ca. 2400 und 2500 MHz umfaßt.

4. Frequenzsprungverfahren nach einem der vorhergehenden Ansprüche,
**dadurch gekennzeichnet,**
**daß** das Frequenzsprungschema mehrere gemäß einer vorgegebenen und zufälligen Sprungreihenfolge geordnete und mit einem bestimmten Frequenzabstand gleichmäßig beabstandete Trägerfrequenzen umfaßt, wobei der minimale Frequenzsprungabstand in der vorgegebenen Sprungreihenfolge sechs Trägerfrequenzkanäle umfaßt.

5. Frequenzsprungverfahren nach Anspruch 4,
**dadurch gekennzeichnet,**
**daß** das vorgegebene Frequenzsprungschema 95 unterschiedliche Trägerfrequenzen umfaßt.

6. Frequenzsprungverfahren nach einem der vorhergehenden Ansprüche,
**dadurch gekennzeichnet,**
**daß** die Aktualisierungsinformationen in Abhängigkeit von der Tatsache erzeugt werden, ob bei der überwachung der Betriebsbedingungen des Mobilfunksystems ein verrauschter Trägerfrequenzkanal festgestellt worden ist oder nicht, und
**daß** für den Fall der Feststellung eines verrauschten Trägerfrequenzkanals die Aktualisierungsinformationen derart erzeugt werden, daß sie die Nichtverwendung der entsprechenden Trägerfrequenz für das Frequenzsprungverfahren anzeigen.

7. Frequenzsprungverfahren nach einem der vorhergehenden Ansprüche,
**dadurch gekennzeichnet,**
**daß** die Übertragung von Kommunikationsinformationen zwischen der Basisstation (11) und der Mobilstation (12) in eine Rahmenstruktur eingebettet erfolgt, wobei jeder Rahmen (8) mehrere Zeitschlitze (9) umfaßt, und
**daß** die Trägerfrequenz zwischen einzelnen Zeitschlitzen (9) eines Rahmens (8) gewechselt wird.

8. Frequenzsprungverfahren nach einem der Ansprüche 1-7,
**dadurch gekennzeichnet,**
**daß** die Übertragung von Kommunikationsinformationen zwischen der Basisstation (11) und der Mobilstation (12) in eine Rahmenstruktur eingebettet erfolgt, und
**daß** die Trägerfrequenz innerhalb eines Rahmens (8) konstant gehalten und lediglich von Rahmen (8) zu Rahmen (8) gewechselt wird.

9. Frequenzsprungverfahren nach einem der vorhergehenden Ansprüche,
**dadurch gekennzeichnet,**
**daß** die Aktualisierungsinformationen über den N_{T}-Steuerkanal übertragen wird.

10. Frequenzsprungverfahren nach Anspruch 9,
**dadurch gekennzeichnet,**
**daß** die Aktualisierungsinformationen in einem acht Bits umfassenden Feld (HOP) übertragen werden, wobei das PARI-Feld des N_{T}-Steuerkanals um diese acht Bits verkürzt wird.

11. Frequenzsprungverfahren nach einem der vorhergehenden Ansprüche,
**dadurch gekennzeichnet,**
**daß** die Aktualisierungsinformationen über den Q_{T}-Steuerkanal übertragen wird.

12. Frequenzsprungverfahren nach Anspruch 11,
**dadurch gekennzeichnet,**
**daß** mit Hilfe mehrerer aufeinanderfolgender Q_{T}-Nachrichten für jede der zur Verfügung stehenden Trägerfrequenzen angezeigt wird, ob diese für den Frequenzsprungvorgang verwendet werden soll oder nicht.

13. Frequenzsprungverfahren nach einem der vorhergehenden Ansprüche,
**dadurch gekennzeichnet,**
**daß** sämtliche für das Frequenzsprungverfahren zur Verfügung stehenden Trägerfrequenzen in mehrere Frequenzgruppen zusammengefaßt sind, wobei die Aktualisierungsinformation für jede dieser Frequenzgruppen anzeigen, ob die zu der jeweiligen Frequenzgruppe gehörenden Trägerfrequenzen für das Frequenzsprungverfahren verwendet werden sollen oder nicht, und die zur Verfügung stehenden Trägerfrequenzen gleichmäßig derart auf die Frequenzgruppen aufgeteilt werden, daß bei Auftreten typischer Störeinflüsse, welche entsprechend verrauschte Trägerfrequenzkanäle zur Folge haben, eine bestmögliche Übertragungsqualität gegeben ist.

## Claims

1. Frequency hopping method for a mobile radio system, the mobile radio system comprising a base station (11) and at least one mobile station (12), and the carrier frequency of the base station (11) and of the mobile station (12) being temporally changed in defined intervals according to a predetermined frequency hopping scheme, certain operating conditions of the mobile radio system being monitored and update information, dependent thereon, being produced for adapting the frequency hopping scheme to the frequency environment of the mobile radio system, the resulting update information being transferred from the base station (11) to the mobile station via a control channel of the mobile radio system, the carrier frequency of the base station (11) and of the mobile station (12) then being changed according to the predetermined frequency hopping scheme, while considering the update information, and the update information being transmitted from the base station (11) to the mobile station (12) and indicating to the mobile station (12) the carrier frequencies of the frequency hopping scheme which are not to be used for the frequency hopping method by the mobile station (12), **characterised in that** the update information is transmitted via a control channel, the format of the control channel being based on the MAC layer of the DECT mobile radio standard, and **in that** the update information for the next n carrier frequencies of the mobile station (12) according to the predetermined frequency hopping scheme indicates whether or not the corresponding carrier frequency is to be used for the frequency hopping method, or all carrier frequencies which are available for the frequency hopping method are combined into a plurality of frequency groups, the update information for each of these frequency groups indicating whether or not the carrier frequencies belonging to the respective frequency group are to be used for the frequency hopping method.

2. Frequency hopping method according to claim 1, **characterised in that** the predetermined frequency hopping scheme is stored in the base station (11) as well as in the mobile station (12).

3. Frequency hopping method according to any one of the preceding claims, **characterised in that** the predetermined frequency hopping scheme includes carrier frequencies within a frequency range of between approximately 2,400 and 2,500 MHz.

4. Frequency hopping method according to any one of the preceding claims, **characterised in that** the frequency hopping scheme comprises a plurality of carrier frequencies which are uniformly spaced in a specific frequency spacing and are positioned according to a predetermined and random hopping sequence, the minimum frequency hopping spacing comprising six carrier frequency channels in the predetermined hopping sequence.

5. Frequency hopping method according to claim 4, **characterised in that** the predetermined frequency hopping scheme comprises 95 different carrier frequencies.

6. Frequency hopping method according to any one of the preceding claims, **characterised in that** the update information is produced depending on whether, or not, a noisy carrier channel has been ascertained during monitoring of the operating conditions of the mobile radio system, and **in that**, in the event of a noisy carrier frequency channel having been ascertained, the update information is produced such that it indicates the non-use of the corresponding carrier frequency for the frequency hopping method.

7. Frequency hopping method according to any one of the preceding claims, **characterised in that** communication information is transmitted between the base station (11) and the mobile station (12) embedded in a frame structure, each frame (8) comprising a plurality of time slots (9), and **in that** the carrier frequency is changed between individual time slots (9) of a frame (8).

8. Frequency hopping method according to any one of claims 1 to 7, **characterised in that** communication information is transmitted between the base station (11) and the mobile station (12) embedded in a frame structure, and **in that** the carrier frequency is maintained constant within a frame (8) and is changed only from one frame (8) to another (8).

9. Frequency hopping method according to any one of the preceding claims, **characterised in that** the update information is transmitted via the N_{T} control channel.

10. Frequency hopping method according to claim 9, **characterised in that** the update information is transmitted in an eight bit field (HOP), the PARI field of the N_{T} control channel being shortened by these eight bits.

11. Frequency hopping method according to any one of the preceding claims, **characterised in that** the update information is transmitted via the Q_{T} control channel.

12. Frequency hopping method according to claim 11, **characterised in that** a plurality of successive Q_{T} messages for each of the available carrier frequencies is used to indicate whether or not said available carrier frequency is to be used for the frequency hopping method.

13. Frequency hopping method according to any one of the preceding claims, **characterised in that** all carrier frequencies which are available for the frequency hopping method are combined into several frequency groups, the update information for each of these frequency groups indicating whether, or not, the carrier frequencies belonging to the respective frequency group are to be used for the frequency hopping method, and the available carrier frequencies are divided up uniformly into the frequency groups such that the best possible transmission quality is provided when typical interferences occur which result in correspondingly noisy carrier frequency channels.

## Revendications

1. Procédé à saut de fréquence pour un système de téléphonie mobile, dans lequel le système de téléphonie mobile comprend une station de base (11) et au moins une station mobile (12) et la fréquence porteuse de la station de base (11) et de la station mobile (12) sont changées dans le temps à des intervalles déterminés selon un schéma de saut de fréquence prédéterminé, dans lequel on surveille des conditions de fonctionnement déterminées du système de téléphonie mobile et on produit en fonction de celles-ci des informations d'actualisation pour l'adaptation du schéma de saut de fréquence à l'environnement de fréquence du système de téléphonie mobile, on transmet les informations d'actualisation produites de la station de base (11) à la station mobile par un canal de commande du système de téléphonie mobile, on change ensuite la fréquence porteuse de la station de base (11) et de la station mobile (12) selon le schéma de saut de fréquence prédéterminé en tenant compte des informations d'actualisation, et les informations d'actualisation sont envoyées de la station de base (11) à la station mobile (12) et la station mobile (12) affichent les fréquences porteuses du schéma de saut de fréquence qui ne doivent pas être utilisées par la station mobile (12) pour le procédé à saut de fréquence, **caractérisé en ce que** les informations d'actualisation sont transmises par un canal de commande, le format du canal de commande étant basé sur la couche MAC de la norme de téléphonie mobile DECT, et **en ce que** les informations d'actualisation indiquent, pour les n prochaines fréquences porteuses de la station mobile (12) selon le schéma de saut de fréquence prédéterminé, si la fréquence porteuse correspondante doit ou non être utilisée pour le procédé à saut de fréquence, ou **en ce que** toutes les fréquences porteuses disponibles pour le procédé à saut de fréquence sont rassemblées en plusieurs groupes de fréquences, les informations d'actualisation indiquant pour chacun de ces groupes de fréquences si les fréquences porteuses appartenant au groupe de fréquences respectif doivent ou non être utilisées pour le procédé à saut de fréquence.

2. Procédé à saut de fréquence selon la revendication 1, **caractérisé en ce que** le schéma de saut de fréquence prédéterminé est mémorisé aussi bien dans la station de base (11) que dans la station mobile (12).

3. Procédé à saut de fréquence selon l'une quelconque des revendications précédentes, **caractérisé en ce que** le schéma de saut de fréquence prédéterminé comprend des fréquences porteuses dans le domaine de fréquence compris entre environ 2400 et 2500 MHz.

4. Procédé à saut de fréquence selon l'une quelconque des revendications précédentes, **caractérisé en ce que** le schéma de saut de fréquence comprend plusieurs fréquences porteuses ordonnées selon une succession de sauts prédéterminée et aléatoire et uniformément espacées d'un écart de fréquence déterminé, l'écart de saut de fréquence minimal comprenant six canaux de fréquence porteuse dans la succession de sauts prédéterminée.

5. Procédé à saut de fréquence selon la revendication 4, **caractérisé en ce que** le schéma de saut de fréquence prédéterminé comprend 95 fréquences porteuses différentes.

6. Procédé à saut de fréquence selon l'une quelconque des revendications précédentes, **caractérisé en ce que** les informations d'actualisation sont produites en fonction du fait que, lors de la surveillance des conditions de fonctionnement du système de téléphonie mobile, on a ou non constaté un canal de fréquence porteuse perturbé et **en ce que**, en cas de constatation d'un canal de fréquence porteuse perturbé, les informations d'actualisation sont produites de telle façon qu'elles indiquent la non utilisation de la fréquence porteuse correspondante pour le procédé à saut de fréquence.

7. Procédé à saut de fréquence selon l'une quelconque des revendications précédentes, **caractérisé en ce que** la transmission d'informations de communication entre la station de base (11) et la station mobile (12) est effectuée au sein d'une structure de cadres, chaque cadre (8) comprenant plusieurs créneaux temporels (9), et **en ce que** la fréquence porteuse est changée entre des créneaux temporels individuels (9) d'un cadre (8).

8. Procédé à saut de fréquence selon l'une quelconque des revendications 1 - 7, **caractérisé en ce que** la transmission d'informations de communication entre la station de base (11) et la station mobile (12) est effectuée au sein d'une structure de cadres, et **en ce que** la fréquence porteuse est maintenue constante à l'intérieur d'un cadre (8) et est uniquement changée d'un cadre (8) à un autre cadre (8).

9. Procédé à saut de fréquence selon l'une quelconque des revendications précédentes, **caractérisé en ce que** les informations d'actualisation sont transmises par le canal de commande N_{T}.

10. Procédé à saut de fréquence selon la revendication 9, **caractérisé en ce que** les informations d'actualisation sont transmises dans un champ (HOP) comprenant 8 bits, le champ PARI du canal de commande N_{T} étant raccourci de ces 8 bits.

11. Procédé à saut de fréquence selon l'une quelconque des revendications précédentes, **caractérisé en ce que** les informations d'actualisation sont transmises par le canal de commande Q_{T}.

12. Procédé à saut de fréquence selon la revendication 11, **caractérisé en ce qu'**à l'aide de plusieurs informations Q_{T} successives pour chacune des fréquences porteuses disponibles, on affiche si celle-ci doit ou non être utilisée pour l'opération de saut de fréquence.

13. Procédé à saut de fréquence selon l'une quelconque des revendications précédentes, **caractérisé en ce que** toutes les fréquences porteuses disponibles pour le procédé à saut de fréquence sont rassemblées en plusieurs groupes de fréquences, les informations d'actualisation affichant pour chacun de ces groupes de fréquences si les fréquences porteuses appartenant au groupe de fréquences respectif doivent ou non être utilisées pour le procédé à saut de fréquence, et les fréquences porteuses disponibles sont réparties uniformément sur les groupes de fréquences de telle façon que, lors de l'apparition d'influences perturbatrices typiques, qui donnent lieu à des canaux de fréquence porteuse perturbés de manière correspondante, la transmission présente la meilleure qualité possible.
